# EUROPÄISCHE PATENTSCHRIFT

(11) **EP 3 088 847 B1**
(45) Veröffentlichungstag und Bekanntmachung des Hinweises auf die Patenterteilung: **09.05.2018**
(21) Anmeldenummer: 16157285.4
(22) Anmeldetag: 25.02.2016
(51) Int. Cl.: G01D 4/00, G08C 17/02, G08C 19/00, H02J 3/00

(54) **VERFAHREN UND VORRICHTUNG ZUM ÜBERTRAGEN VON AUF MESSWERTEN BASIERENDEN LASTGÄNGEN**
METHOD AND DEVICE FOR TRANSFERRING LOAD PROFILES BASED ON MEASURED VALUES
PROCÉDÉ ET DISPOSITIF DE TRANSMISSION DE COURBES DE CHARGES EN FONCTION DE VALEURS DE MESURE

(30) Priorität: 27.04.2015 DE 102015106456
(43) Veröffentlichungstag der Anmeldung: 02.11.2016
(73) Patentinhaber: RWE Deutschland AG, 45128 Essen (DE)
(72) Erfinder: Nikodem, Torsten, 58453 Witten (DE); Schmidt, Eugen, 46487 Wesel (DE)
(74) Vertreter: Cohausz & Florack

(56) Entgegenhaltungen:
- EP-A1- 2 456 043
- Klaus J Müller: "Gewinnung von Verhaltensprofilen am intelligenten Stromzähler", , 1. Juni 2010 (2010-06-01), XP055301445, Gefunden im Internet: URL:http://rd.springer.com/content/pdf/10. 1007/s11623-010-0107-2.pdf [gefunden am 2016-09-09]
- MUTANEN ANTTI ET AL: "Testing low voltage network state estimation in RTDS environment", IEEE PES ISGT EUROPE 2013, IEEE, 6. Oktober 2013 (2013-10-06), Seiten 1-5, XP032549868, DOI: 10.1109/ISGTEUROPE.2013.6695482 [gefunden am 2013-12-24]
- Sma Solar Technology Ag: "SWebBox-BA-de-36 | Version 3.6 DE Gerät zur Überwachung von Anlagen SUNNY WEBBOX", , 10 November 2014 (2014-11-10), XP055374281, Retrieved from the Internet: URL:http://files.sma.de/dl/2585/SWebBox-BA -de-36.pdf [retrieved on 2017-05-18]

## Beschreibung

Der Gegenstand betrifft ein Verfahren zum Übertragen von auf Messwerten basierenden Lastgängen sowie eine Vorrichtung eingerichtet zum Übertragen von auf Messwerten basierenden Lastgängen.

Moderne elektronische Zähler zur Erfassung von Verbrauchsmengen, beispielsweise Elektrizitätszähler, Wasserzähler, Gaszähler oder dergleichen erfassen laufend Messwerte. Die erfassten Messwerte können von dem Verbrauchsmengenzählern über verschiedenste Schnittstellen ausgegeben und ausgelesen werden. Insbesondere ist es möglich, über optische Schnittstellen in Intervallen, beispielsweise im Sekundentakt oder im Zweisekundentakt, Messwerte auszulesen.

Der Vorteil solcher modernen Messgeräte liegt darin, dass der Benutzer solcher Messgeräte über seinen aktuellen Verbrauch informiert werden kann. Hierzu werden aus den erfassten Messwerten Lastgänge konstruiert. Zur Konstruktion von Lastgängen werden die Messwerte zeitlich aufgelöst auf einem Graphen aufgetragen. Der Nutzer kann mit Hilfe der Lastgänge den zeitlichen Verlauf seines Verbrauchs überwachen. Die Konstruktion eines Lastgangs kann in dem Verbrauchsmengenzähler selbst, einer mit dem Verbrauchsmengenzähler verbundenen Schnittstelle oder im Endgerät des Nutzers erstellt werden. Üblich ist es, dass Lastgänge in dem Verbrauchsmengenzähler oder der Schnittstelleneinrichtung an dem Verbrauchsmengenzähler erstellt werden. Die in konstanten Abständen erfassten Messwerte werden gespeichert und zu definierten Zeitpunkten werden Lastgänge aus den gespeicherten Messwerten konstruiert. Diese Lastgänge stehen für den Nutzer zum Abholen im Pull-Betrieb zur Verfügung. Auch ist es möglich, dass einem Anzeigegerät zu definierten Zeiten der konstruierte Lastgang im sogenannten Push-Betrieb übermittelt wird. Dies ist solange unproblematisch, als dass die Übertragungsstrecke zwischen der Stelle, an der der Lastgang konstruiert wurde und der Stelle, an der der Lastgang ausgewertet und gegebenenfalls angezeigt wird, fehlerfrei ist. Kommt es jedoch auf der Übertragungsstrecke zu Übertragungsfehlern oder scheitert die Übertragung gänzlich zum Beispiel durch eine längerfristige Belegung des Übertragungskanals, so ist im Empfänger der aktuelle Lastgang nicht verfügbar und es entstehen Lücken zwischen zwei empfangenen Lastgängen. Diese Lücken lassen sich empfängerseitig nicht ohne Probleme beseitigen.

Üblicherweise würde man bei gängigen Übertragungsverfahren die Übertragung eines neuen Lastgangs solange erneut initiieren, bis eine Übertragung erfolgreich möglich ist. Die jeweils erneuten Übertragungsversuche führen jedoch zu einer längeren Kanalbelegungsdauer auf dem Übertragungsmedium.

Auch kann es bei herkömmlichen Übertragungsverfahren dazu kommen, dass vor einer erfolgreichen Übertragung die ältesten Messwerte aus dem Messwertespeicher entfernt werden. Bei diesem sogenannten FIFO-Prinzip werden die zuerst gespeicherten Messwerte auch zuerst entfernt. Die dann entfernten Messwerte lassen sich dann nicht mehr zur Konstruktion eines Lastgangs verwenden.

Aus der EP 2 456 043 A1 ist ein Verfahren zum Übertragen von Lastgängen zwischen Zählern und einer zentralen Abrechnungsstelle beschrieben.

Das Dokument Klaus J. Müller: "Gewinnung von Verhaltensprofilen am intelligenten Stromzähler", 1. Juni 2010, XP055301445 beschreibt verschiedene Verfahren zur Gewinnung von Verhaltensprofilen an intelligenten Stromzählern.

Das Dokument MUTANEN ANTTI ET AL: "Testing low voltage network state estimation in RTDS environment", IEEE PES ISGT EUROPE 2013, IEEE, 6. Oktober 2013, Seiten 1-5 beschreibt einen Real-Time Digital Simulator, mit dessen Hilfe Netzbedingungen abhängig von Messwerten von Smart Metern simuliert werden können.

Schließlich beschreibt das Dokument Sma Solar Technology AG: "SWebBox-BA-de-36, Version 3.6, Gerät zur Überwachung von Anlagen SUNNY WEBBOX", 10. November 2014 ein Gerät zur Überwachung von Photovoltaikanlagen, bei dem auch Lastgänge an eine Zentrale übertragen werden.

Insbesondere bei der Nutzung eines Übertragungskanals, welcher in seiner Bandbreite beschränkt ist oder einem Übertragungsprotokoll, welches eine nur geringe Datenübertragungsrate ermöglicht ergeben sich für die möglichen Sendeintervalle und Datenpaketgrößen Einschränkungen. Dies ist vor allem dann relevant, wenn beispielsweise in Mehrfamilienhäusern eine Vielzahl von Verbrauchmengenzählern räumlich abgesetzt von den nutzerseitigen Auswerte- und/oder Anzeigeeinrichtungen angeordnet sind. Ein Beispiel einer solchen Topologie ist beispielsweise ein Mehrfamilienhaus, in dem in einem Hausanschlussraum, vorzugsweise im Keller, eine Mehrzahl von Verbrauchsmengenzähler angeordnet sind. Wenn alle diese Verbrauchsmengenzähler mit einer Übertragungseinrichtung/Schnittstelleneinrichtung versehen, verbunden oder
ausgestattet sind, um die erfassten Lastgänge zum Nutzer zu übertragen, kann es bei einem bandbreitenbegrenzten Übertragungskanal zu erheblichen Übertragungsverzögerungen durch Kollisionen kommen. In diesem Fall entstünden bei den Nutzern an den Auswerte- und/oder Anzeigegeräten Lücken in den angezeigten bzw. ausgewerteten Lastgängen. Insbesondere für die Darstellung und Auswertung von Informationen über den Verbrauch stellen jedoch Messwertelücken bzw. Lücken im Lastgang ein Problem dar.

Aus diesem Grunde lag dem Gegenstand die Aufgabe zugrunde, eine Möglichkeit zur Übertragung von Lastgängen auf einem Übertragungsmedium mit einer geringen Datenübertragungsrate zur Verfügung zu stellen, bei dem Lücken in den übertragenen Lastgängen vermieden werden.

Diese Aufgabe wird insbesondere auch durch ein Verfahren nach Anspruch 1 sowie eine Vorrichtung nach Anspruch 13 gelöst.

Vorauseilend sei erwähnt, dass nachfolgend von Lastgängen, Verbrauchsmengen, Lasten und dergleichen die Rede ist, die gegenständlichen Anordnungen und Verfahren sich jedoch genauso auf Leistungsgänge, Einspeisungsmengen, Quellen und dergleichen anwenden lassen. Ob nun eine Last oder ein Einspeiser gemessen wird ist letztlich lediglich eine Frage der Zählrichtung und es ist selbstverständlich, dass die nachfolgende Beschreibung natürlich auf für Erzeuger, Einspeisungen und Einspeisemengen gilt.

Außerdem sei vorangeschickt, dass die Verbrauchsmengenzähler mit der Schnittstelleneinrichtung / Kommunikationseinrichtung verbunden sein können oder dass diese Bestandteil des Verbrauchsmengenzählers sein können, also beispielsweise in einem selben Gehäuse angeordnet sein können.

Zunächst wird vorgeschlagen, dass Messwerte erfasst werden. Die Messwerte können einerseits von einem Verbrauchsmengenzähler, beispielsweise einem Stromzähler, einem Gaszähler, einem Wasserzähler oder dergleichen erfasst werden. Unter einem Erfassen von Messwerten kann gegenständlich auch verstanden werden, dass die gemessenen Messwerte von dem Verbrauchsmengenzähler über eine optische und/oder elektrische Schnittstelle ausgegeben werden und von einer Schnittstelleneinrichtung, insbesondere im Sinne einer Vorrichtung nach Anspruch 14 ausgelesen werden.

Beim Erfassen der Messwerte ist vorzugsweise eine Erfassungsintervalldauer, auch als Zeitabstand zwischen zwei Messwerten bezeichnet, parametriert. D.h., dass die Zeitabstände zwischen zwei Messungen und/oder die Zeitabstände zwischen der Erfassung von zwei zeitlich nebeneinander liegenden Messwerten bestimmt sind.

Die mit der parametrierten Taktung erfassten Messwerte werden zwischengespeichert. Eine Taktung der Erfassung von Messwerten kann beispielsweise im Sekundentakt, im Zweisekundentakt, im Fünfsekundentakt, im Zehnsekundentakt, im Minutentakt oder dergleichen erfolgen.

Basierend auf diesen zwischengespeicherten Messwerten werden Lastgänge erstellt und übertragen.

Anders als dies herkömmlich jedoch der Fall ist, werden die Lastgänge nicht statisch durch eine eins-zu-eins Übertragung der erfassten Messwerte in den Lastgang erstellt. Vielmehr ist erkannt worden, dass für eine Auswertung und/oder Darstellung von Lastgängen von besonderer Bedeutung ist, dass diese möglichst lückenlos sind. Eine geringere Relevanz hat dabei die zeitliche Auflösung der Lastgänge. D.h., dass gegenständlich erkannt worden ist, dass die Taktung der Erfassung der Messwerte in der Regel vollkommen ausreichend ist, Lastgänge mit einer ausreichenden Genauigkeit darzustellen. Gegenständlich ist erkannt worden, dass es möglich ist, Lastgänge auch dann noch aussagekräftig erstellen zu können, wenn die Lastgänge aus Referenzwerten derart ermittelt werden, dass zumindest ein Intervall zwischen zwei benachbarten Grenzwerten gegenüber einem Intervall zwischen zwei benachbarten Messwerten gespreizt ist. Dies kann derart verstanden werden, dass die Taktung der Erfassung der Messwerte höher sein kann, als die Taktung der Referenzwerte. Somit wird die Anzahl der Referenzwerte in einem Auswertungsintervall, für das ein Lastgang erstellt wird, in der Regel geringer sein, als die entsprechende Anzahl der zwischengespeicherten Messwerte auf denen der Lastgang basiert.

Auf einem Übertragungskanal mit begrenzter Datenübertragungsrate ist die Anzahl der Referenzwerte, die für den Lastgang übertragen werden können, begrenzt. Es ist nicht möglich, stets alle erfassten und zwischengespeicherten Messwerte fehlerfrei an einen Empfänger zu übertragen. Zur Vermeidung von Lücken in den Lastgängen wird daher vorgeschlagen, dass die Anzahl der Referenzwerte geringer ist, als die Anzahl der zwischengespeicherten Messwerte, dabei jedoch für ein Auswertungsintervall ein lückenloser Lastgang bereitgestellt werden kann. Die ermittelten Referenzwerte werden gegenständlich als Lastgang übertragen.

Eine Spreizung im Sinne des Gegenstandes kann so verstanden werden, dass eine Zeitdauer zwischen der Erfassung von zwei Messwerten kleiner ist, als eine Zeitdauer, die fiktiv zwischen zwei gebildeten Referenzwerten verstreicht. Zum Beispiel kann in einem Überwachungsintervall, d.h. in einem Intervall für das ein Lastgang erstellt wird, die Anzahl der definierten Messwerte 60 sein und die Dauer des Überwachungsintervalls eine Minute. Möchte man jedoch mit nur 40 Referenzwerten einen Lastgang über eine Minute darstellen, so muss die Datenmenge aus den zwischengespeicherten Messwerten um ein Drittel reduziert werden. Dies ist durch verschiedene, nachfolgend noch beschriebene Maßnahmen möglich.

Um empfängerseitig den Lastgang auch in einer korrekten zeitlichen Auflösung darstellen zu können, ist es notwendig, dass dem Empfänger die Zeitbasis bzw. die zeitliche Auflösung der Referenzwerte bekannt ist. Insofern kann es sinnvoll sein, dass neben der Übertragung von Referenzwerten auch eine Information zu einer zeitlichen Auflösung der Intervalle zwischen zwei Referenzwerten übertragen wird.

Insbesondere kann dies derart geschehen, dass ein Faktor zu einer parametrierten Taktung von der Erfassung der Messwerte übertragen wird. Beispielsweise kann eine Taktung der Erfassung der Messwerte bei einer Sekunde parametriert sein. Für einen Lastgang über eine Minute müssten zunächst 60 Messwerte übertragen werden. Um die gegenständliche Reduktion der Datenmenge zu erzielen, werden jedoch nur 40 Referenzwerte übertragen. In diesem Fall müsste der Empfänger wissen, dass diese 40 übertragenen Referenzwerte jedoch einen Lastgang über ein Überwachungsintervall von einer Minute repräsentieren sollen. Um dies zu ermöglichen, könnte zusätzlich eine Information übermittelt werden, dass ein Intervall zwischen zwei Referenzwerten dem 1,5-fachen der Taktung der Erfassung der Messwerte entspricht. Die Intervalle zwischen zwei Referenzwerten würden in diesem Fall um das 1,5-fache gespreizt, so dass ein Intervall zwischen zwei Referenzwerten eine Dauer von 1,5 Sekunden repräsentiert und somit 40 Referenzwerte eine Dauer von einer Minute. Der hieraus resultierende Lastgang würde wiederum ein Überwachungsintervall von einer Minute abdecken.

Gemäß einem Ausführungsbeispiel wird vorgeschlagen, dass die Referenzwerte in einem Datenfeld eines Datenpakets übertragen werden. Die Größe des Datenfeldes ist dabei vorzugsweise fest definiert. Es hat sich gezeigt, dass beispielsweise ein Datenfeld mit einer Größe von 60 Bit ausreichend sein kann, einen Lastgang zu übertragen.

Insbesondere, wie erwähnt, ist die Übertragung von Lastgängen auf bandbreitenbegrenzten, kollisionsbehafteten, durch mehrere Nutzer geteilten Übertragungskanälen problematisch. Hierzu zählen Kurzstreckenfunkübertragungen in den ISM- und SRD-Bändern. Moderne Funksysteme in diesen Frequenzbereichen nutzen Modulationstechniken wie beispielsweise die LoRa-Modulation zur Erhöhung der Reichweite, die jedoch die Datenrate weiter einschränken auf z.B. eine maximale Datenrate von 1 kBit/s. Das Übertragungsprotokoll kann dabei beispielsweise eine Übertragungsreichweite von mehreren 100 Metern ermöglichen. Dies kann auf Kosten der Datenrate erfolgen, insbesondere kann die Datenrate beschränkt sein auf bis zu 1kBit/s, insbesondere zwischen 20 Bit/s bis zu 300 Bit/s.

Gemäß einem Ausführungsbeispiel kann erfasst werden, wie lange eine Wartezeit seit einer letzten erfolgreichen Übertragung eines Lastgangs ist. Die Wartezeit kann beispielsweise in der Anzahl an Takten der parametrierten Taktung der erfassten Messwerte ausgedrückt sein. Besonders einfach lässt sich beispielsweise die Wartezeit durch die Anzahl der zwischengespeicherten Messwerte bestimmen. Bei einer Taktung von einer Sekunde der Erfassung und Speicherung der Messwerte kann eine Wartezeit von einer Minute durch sechzig ausgedrückt werden. Auch kann eine Anzahl an Messungen ausschlaggebend für eine Wartezeit sein.

Während der Wartezeit werden, wie erläutert, die erfassten Messwerte zwischengespeichert. Aus diesen während der Wartezeit zwischengespeicherten Messwerten wird die definierte Anzahl an Referenzwerten ermittelt. Hierbei entspricht die Anzahl der Referenzwerte in der Regel nicht der Anzahl der zwischengespeicherten Messwerte, da eine Spreizung des Intervalls zwischen zwei benachbarten Messwerten gegenüber einem Intervall zwischen zwei benachbarten Messwerten stattfindet.

In diesem Zusammenhang sei erwähnt, dass unter benachbarten Referenzwerten und/oder unter benachbarten Messwerten solche Messwerte verstanden werden können, die zeitlich aufeinanderfolgen. Insbesondere sind solche Werte die Intervallgrenze eines Intervalls zwischen diesen Werten.

Wie bereits erwähnt, wird die Wartezeit bestimmt, die seit einer letzten erfolgreichen Übertragung eines Lastgangs verstrichen ist. Zur Bestimmung dieser Wartezeit kann die Anzahl äquidistanter Intervalle mit einer definierten Intervalldauer bestimmt werden. Beispielsweise sind äquidistante Intervalle die der parametrierten Taktung entsprechende Intervalle. So kann ein äquidistantes Intervall in diesem Sinne gleich der Taktung der Erfassung der Messwerte sein.

Um die Auswertung und Darstellung der übertragenen Lastgänge empfängerseitig zu ermöglichen, ohne stets eine Information darüber mit übertragen zu müssen, wie lange seit einem letzten Referenzwert vergangen ist, wird vorgeschlagen, dass die Intervalle zwischen zwei benachbarten Referenzwerten zeitlich äquidistant zueinander gebildet werden. In diesem Zusammenhang sei erwähnt, dass Intervalle zwischen Referenzwerten jeweils eines Datenpakets zeitlich äquidistant zueinander sein können. Insbesondere sei darauf verwiesen, dass aufeinanderfolgende Datenpakete Referenzwerte enthalten können, die jeweils innerhalb eines Datenpakets zeitlich zueinander äquidistant sind, die Intervallbreiten zwischen zwei Datenpaketen jedoch unterschiedlich groß sein können. Dies liegt daran, dass jeweils für einen Lastgang, der insbesondere in einem Datenfeld eines Datenpakets übertragen wird, die Anzahl der Referenzwerte zwar gleich ist, jedoch die Referenzwerte auf einer unterschiedlichen Anzahl zwischengespeicherter Messwerte beruhen können. Dies kann daran liegen, dass die Wartezeiten zwischen erfolgreichen Übertragungen von Lastgängen zueinander variieren.

Bei einer störungsfreien Übertragung kann es sinnvoll sein, zu jedem gespeicherten Messwert einen Referenzwert zu übertragen. So kann es beispielsweise sinnvoll sein, bei einer Taktung von einer Sekunde der Erfassung der Messwerte jede Minute 60 Referenzwerte zu übertragen, die auf den erfassten zwischengespeicherten Messwerten basieren und hieraus den Lastgang empfängerseitig darzustellen. Dann liegt keine Spreizung vor.

Kommt es jedoch aufgrund eingesetzter Kollisionsvermeidungsverfahren oder sonstiger Umstände zu einer zeitlichen Verzögerung der Übertragung des Datenpakets oder kommt es zu einer fehlerhaften Übertragung eines Datenpakets, so müsste bei der nächsten Übertragung der nicht übertragene oder der fehlerhaft übertragene Lastgang zusammen mit dem neu erfassten Messwerten als Lastgang übertragen werden. Um die Datenpaketgröße konstant zu halten, würden dann zwar für einen Lastgang wiederum die gleiche Anzahl an Referenzwerten übertragen, diese würden jedoch auch auf einer höheren Anzahl an zwischengespeicherten Messwerten beruhen. Dies wird durch die Spreizung des Intervalls ermöglicht.

Gemäß einem Ausführungsbeispiel wird vorgeschlagen, dass Referenzwerte als absolute Werte übertragen werden. Dies führt zu einem geringen Rechenaufwand zur Erstellung des Datenpaketes. Zur Reduktion von Datenraten kann es auch sinnvoll sein, dass Referenzwerte als Differenzwerte zu einem zeitlich vorhergehenden Referenzwert übertragen werden. Insbesondere kann eine Differenz zu einem jeweils ersten Referenzwert eines Datenfeldes oder zu dem jeweils zeitlich benachbarten Referenzwert gebildet werden. Durch geeignete Quellkodierung kann die Datenrate weiter reduziert werden, da in der Regel geringe Differenzen häufiger vorkommen als hohe Differenzen. Dies kann darauf beruhen, dass der Verbrauch in der Regel nur leicht schwankt. Ist dies erkannt worden, können Datenworte für kleine Abweichungen mit weniger Bits kodiert werden, als Datenworte mit großen Abweichungen.

Gemäß einem Ausführungsbeispiel wird vorgeschlagen, dass ein Quotient N aus der Wartezeit und der definierten Anzahl der Referenzwerte bestimmt wird. Dies ist ein Maß dafür, wie die Spreizung der Referenzwerte sein muss.

Gemäß einem Ausführungsbeispiel wird vorgeschlagen, dass für den Fall, dass die Wartezeit ohne Rest durch die definierte Anzahl der Referenzwerte teilbar ist, die definierten Referenzwerte aus jedem N-ten zwischengespeichert Messwert bestimmt werden. Insbesondere wenn der Quotient N eine natürliche Zahl ist, ist die Wartezeit ohne Rest durch die definierte Anzahl der Referenzwerte teilbar. Vorzugsweise ist das Ergebnis einer Modulo-Operation aus Wartezeit und definierter Anzahl der Referenzwerte gleich 0. Ist beispielsweise der Quotient gleich 2, wird jeder zweite zwischengespeicherte Messwert in einen Referenzwert umgewandelt. Dies ist insbesondere für die Bestimmung der Referenzwerte höchst effizient, da keine Umrechnung erfolgen muss.

Anders ist dies jedoch, wenn die Wartezeit nur mit einem Rest durch die definierte Anzahl der Referenzwerte teilbar ist. In diesem Fall kann es sinnvoll sein, die Referenzwerte aus den zwischengespeicherten Messwerten auf eine andere Art und Weise zu bestimmen. Insbesondere wird nach einem Ausführungsbeispiel vorgeschlagen, dass in einem solchen Fall die definierten Referenzwerte aus interpolierten, zwischengespeicherten Messwerten bestimmt werden. Zunächst werden virtuelle Zeitpunkte bestimmt, die den Referenzwerten zugeordnet werden. Diese virtuellen Zeitpunkte werden vorzugsweise so bestimmt, dass die definierte Anzahl an Referenzwerten in einem Überwachungsintervall zeitlich äquidistant zueinander sind. Anschließend können diejenigen Messwerte berücksichtigt werden, die den bestimmten virtuellen Zeitpunkten zeitlich benachbart sind, insbesondere vor- und nachgelagert sind. Die so bestimmten Messwerte können beispielsweise interpoliert werden. Für den definierten Referenzwert werden somit die zeitlich zum virtuellen Zeitpunkt vor- und nachgelagerten, unmittelbar benachbarten Messwerte verwendet und ein arithmetisches oder geometrisches Mittel aus diesen Messwerten bestimmt.

Auch kann eine Wichtung der benachbarten Messwerte in dem Sinne erfolgen, dass der zeitliche Abstand des virtuellen Zeitpunkts zu einem jeweiligen Messwert Berücksichtigung findet. Je näher der virtuelle Zeitpunkt an dem Messwert liegt, desto höher kann eine Wichtung dieses Messwertes sein, je weiter der virtuelle Zeitpunkt von dem Messwert entfernt ist, desto geringer kann eine Wichtung dieses Messwertes sein. Die beiden Wichtungsfaktoren für die beiden benachbarten Messwerte können sich zu 1 summieren.

Auch kann gemäß einem Ausführungsbeispiel der jeweilige zwischengespeicherte Messwert als Referenzwert verwendet werden, der dem zuvor bestimmten virtuellen Zeitpunkt zeitlich am nächsten liegt.

Durch die Spreizung wird erreicht, dass die Anzahl der definierten Referenzwerte für einen Lastgang kleiner ist, als die Anzahl der erfassten Messwerte für diesen Lastgang.

Um feststellen zu können, ob eine Übertragung eines Lastgangs erfolgreich war, kann es notwendig sein, eine Empfangsbestätigung vom Empfänger zu erhalten. Aus diesem Grunde wird vorgeschlagen, dass eine Empfangsbestätigung eines empfangenen Datenpaketes empfangen wird. Ausgehend von dieser Empfangsbestätigung kann festgestellt werden, ob ein übertragener Lastgang erfolgreich übertragen wurde oder nicht und abhängig davon die Wartezeit bestimmt werden, wie lange es her ist, seit ein letzter Lastgang erfolgreich übertragen wurde.

Auch kann lediglich ein Carrier Sense durchgeführt werden und bei Verfügbarkeit des Kanals das Datenpaket gesendet werden. Es wird nicht überwacht, ob das Datenpaket kollisionsfrei empfangen wurde. Dann wäre ein solcher Sendeversuch als erfolgreiche Übertragung des Lastgangs zu werten.

Es versteht sich, dass ein Lastgang nicht zwingend in einem einzigen Datenpaket übertragen werden muss. Ein Lastgang kann auch durch in mehreren Datenpaketen übertragene Referenzwerte übertragen werden.

Auch kann es sinnvoll sein, die im Zeitraum vor einer erfolgreichen Übertragung des Lastgangs zwischengespeicherten Messwerte für eine nachfolgende Berechnung von Lastgängen unberücksichtigt zu lassen, insbesondere auch aus einem Zwischenspeicher zu entfernen, insbesondere zu löschen.

Gemäß einem weiteren Aspekt wird eine Vorrichtung vorgeschlagen, die zur Durchführung eines Verfahrens nach einem der vorangehenden Ansprüche eingerichtet ist. Diese Vorrichtung verfügt vorzugsweise über Lesemittel, die zum Erfassen von Messwerten eingerichtet sind. Solche Lesemittel können beispielsweise in der Form eine Optokopplers gebildet sein, der an einen optischen Ausgang eines Verbrauchsmengenzählers angeschlossen werden kann. Hierüber können die von dem Verbrauchsmengenzähler gemessenen Messwerte ausgelesen werden. Auch kann eine rein elektrische bzw. elektronische Schnittstelle als Lesemittel vorgesehen sein. Insbesondere kann eine drahtgebundene Erfassung der Messwerte aus dem Verbrauchsmengenzähler durch ein Lesemittel erfolgen. Die Vorrichtung kann auch in einem Verbrauchsmengenzähler integriert sein. Diese Vorrichtung kann als Schnittstelleneinrichtung verstanden werden.

Neben dem Lesemittel kann die gegenständliche Vorrichtung Speichermittel aufweisen. Die Speichermittel können einen flüchtigen Speicher enthalten, der die erfassten Messwerte speichert. Ein solcher Speicher kann beispielsweise ein RAM-Speicher sein.

Darüber hinaus können Kommunikationsmittel vorgesehen sein, die zum Übertragen von auf den zwischengespeicherten Messwerten basierenden Lastgängen geeignet sind. Ein solches Kommunikationsmittel kann beispielsweise ein auf einem Chip integrierter Transceiver sein, der eine Kurzstreckenfunkübertragung mit Modulationstechniken zur Reichweitenerhöhung, wie beispielsweise unter Einsatz der LoRa-Modulation, ermöglicht.

Um die Referenzwerte ermitteln zu können, sind Rechenmittel vorgesehen. Mit Hilfe dieser Rechenmittel, die beispielsweise einen Mikrocontroller, einen digitalen Signalprozessor oder einen Mikrocomputer enthalten können, kann aus den zwischengespeicherten Messwerten die definierte Anzahl an Referenzwerten ermittelt werden. Hierbei können Rechenvorschriften vorgesehen sein, mit denen ein Intervall zwischen zwei Referenzwerten bestimmt wird. Dieses Intervall kann durch die Wartezeit und die Anzahl der Referenzwerte bestimmt sein. Dieses Intervall kann durch die Wartezeit und die Anzahl der Referenzwerte bestimmt sein. Anschließend können unter Verwendung des bestimmten Intervalls die virtuellen Zeitpunkte bestimmt werden, zu denen Referenzwerte bestimmt werden müssen. Basierend auf diesen Zeitpunkten können aus den Messwerten die Referenzwerte berechnet werden. Das Bestimmen des Intervalls zwischen zwei benachbarten Referenzwerten erfolgt vorzugsweise derart, dass das Intervall zwischen diesen Referenzwerten gegenüber einem Intervall zwischen zwei benachbarten Messwerten gespreizt ist.

Anschließend kann das Kommunikationsmittel angewiesen werden, die zuvor bestimmten Referenzwerte als Lastgang zu übertragen.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: ein System mit einer Mehrzahl an Verbrauchsmengenzähler, Schnittstelleneinrichtungen und nutzerseitigen Auswerte- und/oder Anzeigeeinrichtungen;
- Fig. 2: einen beispielhaften Lastgang basierend auf erfassten Messwerten;
- Fig. 3: ein mögliches Datenpaket;
- Fig. 4: die Erstellung von Datenfeldern eines Datenpakets basierend auf Messwerten;
- Fig. 5: die Erstellung von Datenfeldern aus Referenzwerten basierend auf Messwerten nach einem Ausführungsbeispiel;
- Fig. 6: die Erstellung eines Datenfeldes aus Referenzwerten basierend auf Messwerten gemäß einem Ausführungsbeispiel;
- Fig. 7: die Erstellung eines Datenfeldes aus Referenzwerten basierend auf Messwerten gemäß einem Ausführungsbeispiel.

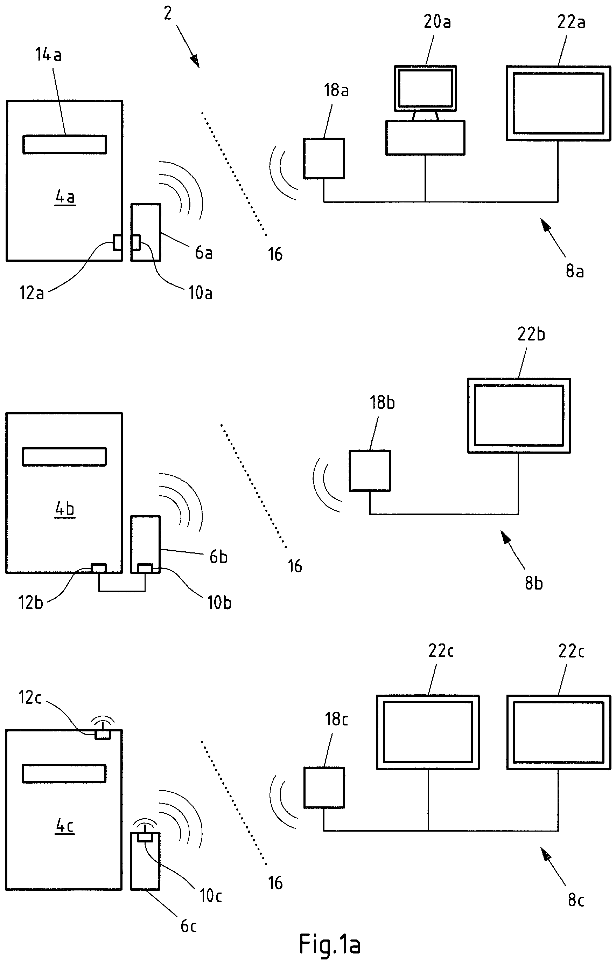

Fig. 1a zeigt ein System 2, bei dem eine Mehrzahl von Verbrauchsmengenzählern 4a-c über Schnittstelleneinrichtungen 6a-c drahtlos mit nutzerseitigen Heimnetzen 8a-c verbunden sind. Die Schnittstelleneinrichtungen 6a-c sind dazu eingerichtet, über geeignete Schnittstellen 10a-c, 12a-c mit den Verbrauchsmengenzählern 4a-c zu kommunizieren.

Der Verbrauchsmengenzähler 4a ist beispielsweise ein Stromzähler zur Erfassung eines elektrischen Energieverbrauchs oder auch eine elektrischen Einspeisung. Dieser Verbrauchsmengenzähler 4a kann beispielsweise ein Smart-Meter sein. Der Verbrauchsmengenzähler 4a verfügt über eine Anzeige 14a an der ein aktueller Zählerstand vom Nutzer ausgelesen werden kann.

Darüber hinaus verfügt der Verbrauchsmengenzähler 4a über eine optische Schnittstelle 12a. Über die optische Schnittstelle 12a lassen sich die aktuellen Zählerstände des Verbrauchsmengenzählers 4 als Messwerte auslesen und erfassen. Hierzu kann die Schnittstelle 12a beispielsweise in einer vorgegebenen Taktung, beispielsweise im Sekundentakt, Zweisekundentakt, Fünfsekundentakt oder dergleichen Messergebnisse zur Verfügung stellen. Diese Messergebnisse können von einer optischen Schnittstelle 10a der Schnittstelleneinrichtung 6a erfasst werden.

In der Schnittstelleneinrichtung 6a werden die erfassten Messwerte des Verbrauchsmengenzählers 4a nach einem gegenständlichen Verfahren verarbeitet und anschließend über eine Luftschnittstelle 16 an einen heimnetzseitigen Empfänger 18a übermittelt.

Auf der Luftschnittstelle 16 verwenden die Schnittstelleneinrichtung 6a sowie der heimnetzseitige Empfänger 18a vorzugsweise ein Funksystem, das es ermöglicht, über eine große Strecke Daten zu übertragen. Ein solches Funksystem kann beispielsweise ein System zur Kurzstreckenfunkübertragung in den ISM- oder SRD-Bändern sein, das Modulationstechniken zur Reichweitenerhöhung wie beispielsweise die LoRa-Modulation einsetzt. Dies ist insbesondere für den Anwendungsfall sinnvoll, in dem eine Vielzahl von Verbrauchsmengenzählern 4a-c in einem Mehrfamilienhaus beispielsweise im Keller angeordnet sind und die Bewohner des Hauses ihren jeweiligen Verbrauchsmengenzähler von ihrer Wohnung auslesen wollen. Der Verbrauchsmengenzähler 4a könnte auch ein Gaszähler, ein Wasserzähler oder ein sonstiger Verbrauchsmengenzähler sein. Darüber hinaus ist die Beschreibung der Schnittstelleneinrichtung 6a und des heimnetzseitigen Empfänger 18a auch übertragbar auf die Schnittstelleneinrichtungen 6b, 6c sowie die Empfänger 18b, c.

Der Verbrauchsmengenzähler 4b kann ähnlich dem Verbrauchsmengenzähler 4a aufgebaut sein. Im Unterschied zum Verbrauchsmengenzähler 4a ist jedoch eine drahtgebundene Schnittstelle 12b zu der Schnittstelle 10b der Schnittstelleneinrichtung 6b vorgesehen. Diese drahtgebundene Schnittstelle 12b kann beispielsweise nach einem Messstellenprotokoll betrieben werden. Dies kann beispielsweise ein standardisiertes Protokoll sein, z.B. ein Local Metrological Network LMN Protokoll. Dies kann beispielsweise ein mBus Protokoll sein. Das Protokoll kann beispielsweise nach der technischen Richtlinie TR03109 spezifiziert sein. Auch kann ein SML (Smart Meter Language) Protokoll implementiert sein. Auch die von dem Verbrauchsmengenzähler 4b erfassten Messwerte lassen sich in einer Taktung, die parametrierbar ist, über die Schnittstellen 10b, 12b auslesen und von der Schnittstelleneinrichtung 6b mittels Referenzwerten als Lastgang an ein Heimnetz 8b übertragen.

Schließlich zeigt der Verbrauchsmengenzähler 4c eine weitere Möglichkeit der Kopplung mit einer Schnittstelleneinrichtung 6c. Hierbei erfolgt die Kopplung mittels eines Funkprotokolls. Dies kann beispielsweise ein Nahfeldfunkprotokoll, z.B. Bluetooth, NFC oder dergleichen sein, mit dem eine Kommunikation zwischen der Schnittstelle 12c und der Schnittstelle 10c möglich ist. Über diese Schnittstelle können ebenfalls die Messwerte von der Schnittstelleneinrichtung 6c erfasst werden.

Von dem heimnetzseitigen Empfänger 18a-c werden die empfangenen Lastgänge in das Heimnetz 8a-c eingespeist. Es versteht sich, dass eine geeignete Kopplung zwischen dem jeweiligen Empfänger 18a-c und jeweils einer der Schnittstelleneinrichtung 6a-c stattgefunden hat, so dass die übertragenen Lastgänge nur von den Schnittstelleneinrichtungen 6a-c in den Empfängern 8a-c empfangen werden können, für die die Empfänger 18a-c autorisiert sind.

In den jeweiligen Heimnetzen 8a-c können sowohl Auswerteeinrichtungen 20a als auch Anzeigeeinrichtungen 22a-c angeordnet sein. Mittels der Auswerteeinrichtungen 20a kann eine Auswertung der Lastgänge erfolgen. Mittels der Anzeigeeinrichtung 22a-c können empfangene Lastgänge dargestellt werden.

Sowohl für die Auswertung als auch die Anzeige der Lastgänge ist es von Vorteil, wenn diese lückenlos sind. Für die lückenlose Übermittlung von Lastgängen über die Funkschnittstelle 16, welche als Shared-Medium verlustbehaftet ist und gegebenenfalls nur über eine eingeschränkte Datenübertragungsrate verfügt, wird das gegenständliche Verfahren vorgeschlagen.

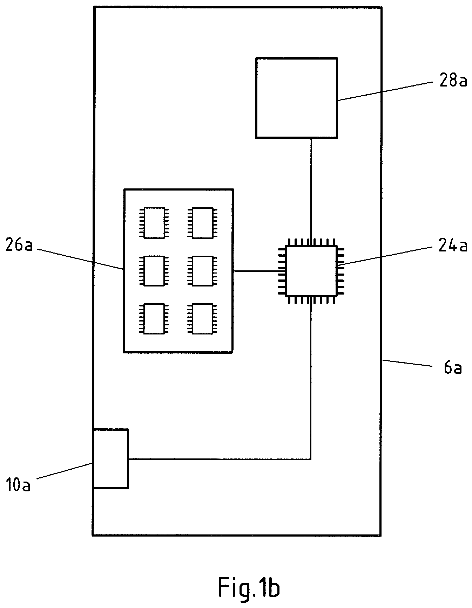

Das gegenständliche Verfahren wird durch eine Schnittstelleneinrichtung 6, wie sie in Fig. 1b schematisch dargestellt ist, durchgeführt. Die Schnittstelleneinrichtung 6a verfügt über eine Schnittstelle 10a. Die Schnittstelle 10a ist mit einem integrierten Mikroprozessor 24a verbunden. Der Mikroprozessor 24a veranlasst das Erfassen der Messwerte über die Schnittstelle 10a.

Der Mikroprozessor 24a ist mit einem internen Speicher 26a verbunden, indem erfasste Messwerte zwischengespeichert werden können.

Schließlich ist der Mikroprozessor 24a mit einer Kommunikationseinrichtung 28a verbunden.

Zunächst wird über den Mikroprozessor 24a das Erfassen der Messwerte über die Schnittstelle 10a initiiert. Die jeweils erfassten Messwerte werden von dem Mikroprozessor 24a in den Speicher 26a zwischengespeichert.

Zusätzlich zum Verarbeiten der erfassten Messwerte wird vom Mikroprozessor 24a eine Wartezeit überwacht, die seit einer letzten erfolgreichen Übertragung eines Lastgangs vergangen ist. Insbesondere wird die Wartezeit in derselben Einheit erfasst, wie die Taktung der Erfassung der Messwerte ist. Die Taktung kann dabei identisch sein, beispielsweise Sekundentakt, Zweisekundentakt oder dergleichen. Der Mikroprozessor 24a erhält Kenntnis über eine erfolgreiche Übertragung eines Lastgangs von der Kommunikationseinrichtung 28a, die vorzugsweise von einem Empfänger 18a eine Rückmeldung erhalten hat, dass ein Lastgang erfolgreich übertragen wurde. Diese Rückmeldung kann aber auch entfallen.

Die Übertragung der Lastgänge mithilfe der Kommunikationseinrichtung 20a kann beispielsweise mit einem Carrier Sense Zugriffsverfahren durchgeführt werden. Dabei kann auf eine Collision-Detection verzichtet werden. Die Kommunikationseinrichtung 28a lauscht auf den Trägermedium, ob eine Übertragung möglich ist und wenn das Trägermedium nicht belegt ist, wird eine Übertragung durchgeführt. Eine erfolgreiche Übertragung wird von der Kommunikationseinrichtung 28a an den Mikroprozessor 24a übermittelt. Sobald diese Information eingeht, wird von dem Mikroprozessor 24a zunächst veranlasst, dass die bisher gespeicherten Messwerte aus dem Speicher 26a entfernt werden. Parallel dazu beginnt der Mikroprozessor 24a mit der Erfassung der Wartezeit. Sobald die Anzahl der erfassten Messwerte der definierten Anzahl an Referenzwerten entspricht, kann der Mikroprozessor 24a zunächst einen Lastgang aus genau den bisher erfassten Messwerten erstellen, welche als Referenzwerte verwendet werden können. Der so erstellte Lastgang kann vom Mikroprozessor 24a an die Kommunikationseinrichtung 28a übermittelt werden. Wenn eine Übertragung dieses Lastgangs unmittelbar erfolgreich ist, so kommt es nicht zu der gegenständlichen Spreizung der Intervallbreite. Vielmehr wird dann erneut der Speicher 26 mit neuen Messwerten gefüllt, bis die Anzahl der Messwerte erneut der definierten Anzahl der Referenzwerte entspricht. Hieraus wird erneut ein Lastgang erstellt und es wird versucht, diesen über die Kommunikationseinrichtung 28a zu übermitteln.

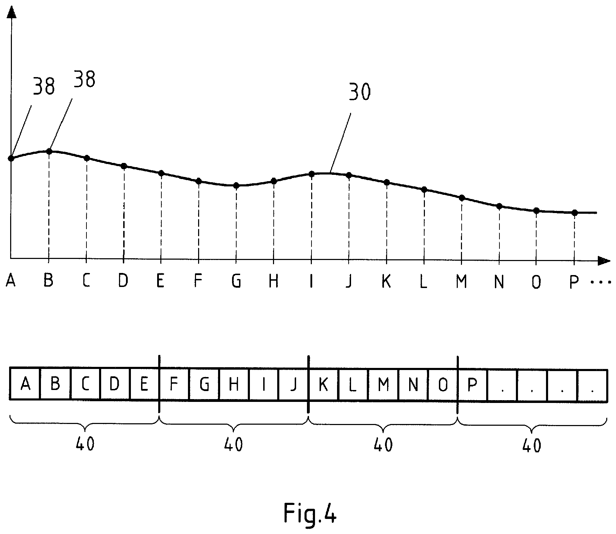

Eine erfolgreiche Übermittlung eines solchen Lastgangs ist in der Fig. 4 dargestellt.

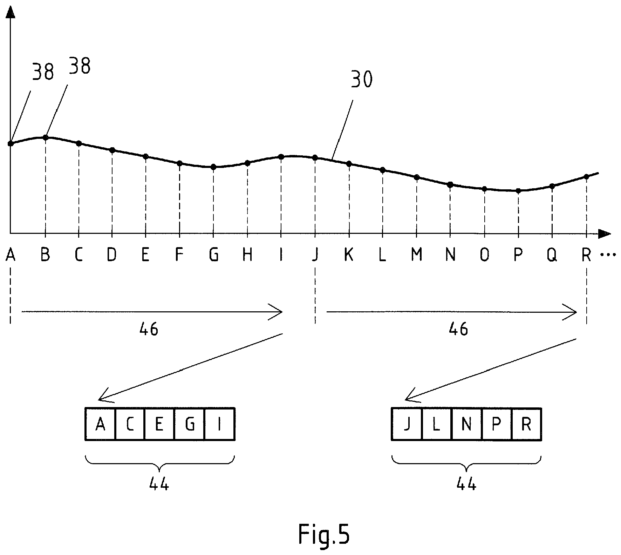

Kann die Kommunikationseinrichtung 28a jedoch den Lastgang nicht übermitteln, so werden weiter neue Messwerte in dem Speicher 28a eingeschrieben und mit jedem Takt, jedem zweiten Takt oder nach einer anderen, vorbestimmten Zeit wird von dem Mikroprozessor 24a ein neuer Lastgang aus Referenzwerten erstellt, deren zeitliches Intervall zueinander größer ist, als ein zeitliches Intervall zwischen den Messwerten. Die Erstellung solcher Lastgänge ist beispielhaft in den Figuren 5 bis 7 dargestellt.

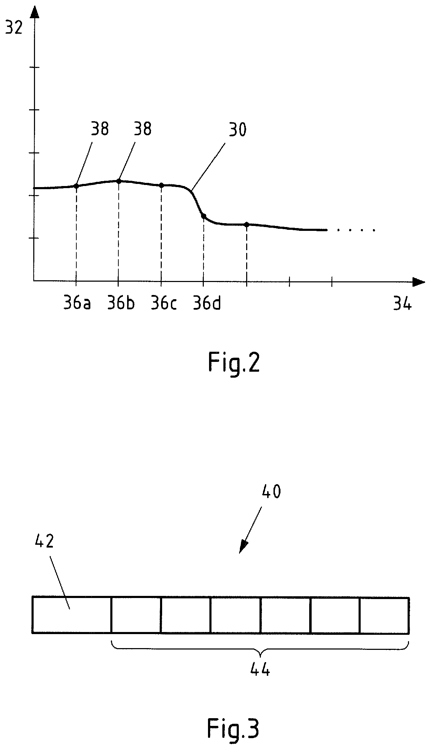

Fig. 2 zeigt einen Lastgang 30. Der Lastgang 30 kann den Verlauf einer Menge 32, beispielsweise einer elektrischen Energie über eine Zeit 34 darstellen. Zur Erstellung des Lastgangs 30 können zu definierten Zeitpunkten 36 Messwerte 38 erfasst werden. Der Abstand der Zeitpunkte 36 zueinander kann als Intervall zwischen zwei benachbarten Messwerten verstanden werden. Der gezeigte Lastgang 30 zeigt z.B. nur einen Verbrauch, er kann aber auch eine Einspeisung zeigen. Dann schwankte der Lastgang z.B. auch teilweise um die Nullinie der angezeigten Menge. Auch kann nur eine Einspeisung dargestellt werden. Dies ist lediglich eine Frage des Vorzeichens der Zählrichtung bzw. des Zählsystems.

Die erfassten Messwerte bzw. die hieraus abgeleiteten Referenzwerte werden in einem Datenfeld eines Datenpakets übertragen. Ein solches Datenpaket ist in Fig. 3 dargestellt. Das Datenpaket 40 verfügt über einen Kopf 42 sowie über ein Datenfeld 44. In dem Kopf 42 können allgemeine Verwaltungsinformationen hinterlegt sein und in dem Datenfeld 44 können die Referenzwerte übertragen werden. Die Länge des Datenfelds 44 ist definiert und bei einer definierten Datenbreite für den Referenzwert ergibt sich aus der Größe des Datenfelds 44 eine definierte Anzahl der Referenzwerten, die mit einem Datenpaket 40 übertragen werden können.

Für den Fall, dass eine Übertragung stets möglich ist, würde ein Lastgang 30 gemäß der Fig. 4 übertragen werden. In der Fig. 4 ist zu erkennen, dass zu äquidistant voneinander beabstandeten Zeitpunkten A-O jeweils Messwerte 38 erfasst werden. Die zu den Zeitpunkt A-O erfassten Messwerte 38 werden jeweils gruppiert in ein Datenfeld 40 eingeschrieben. In den gezeigten Beispielen ist das Datenfeld 40 von einer Größe, so dass insgesamt fünf Messwerte bzw. Referenzwerte abgelegt werden können. D.h. für den Fall einer fehlerlosen Übertragung, dass jeweils fünf Messwerte, die nacheinander erfasst wurden, in jeweils einem Datenfeld übertragen werden. Empfängerseitig lässt sich so aus den empfangenen Messwerten 38 der Lastgang 30 rekonstruieren. Es kann jedoch dazu kommen, dass die Übertragung fehlerbehaftet ist und einzelne Datenpakete 40 fehlerhaft übertragen werden oder gar nicht übertragen werden können. In diesem Fall kommt es jedoch dazu, dass weitere Messwerte erfasst werden und der Lastgang fortgeschrieben werden muss.

Um empfängerseitig eine Rekonstruktion eines Lastgangs zu ermöglichen, wird nun eine Spreizung eines Intervalls zwischen zwei Referenzwerten vorgeschlagen, so dass ein zeitlicher Abstand zwischen zwei Referenzwerten größer ist, als ein zeitlicher Abstand zwischen zwei Messwerten.

Eine beispielhafte Erstellung von Referenzwerten aus Messwerten ist in der Fig. 5 dargestellt. In der Fig. 5 ist erneut ein Verlauf eines Lastgangs 30 dargestellt. Auch hier werden wieder Messwerte 38 zu Zeitpunkten A-O erfasst. Gleichzeitig wird überwacht, wie lange eine Wartezeit 46 seit einer letzten erfolgreichen Übertragung ist. Die Wartezeit 46 wird beispielsweise in derselben Einheit erfasst, wie die Taktung zwischen zwei Messwerten 38. In dem gezeigten Beispiel sind beispielsweise zehn Messwerte erfasst worden, seitdem ein Datenpaket 40 erfolgreich übertragen wurde. Die Anzahl von zehn Messwerten stellt eine Wartezeit von zehn dar. Gleichzeitig ist bekannt, dass insgesamt fünf Referenzwerte in einem Datenfeld 44 übertragen werden können. Daraus folgt, dass eine MODULO-Operation aus Wartezeit und Anzahl von Referenzwerten MODULO[10,5] = 0 ergibt. Also ist die Wartezeit ohne Rest durch die Anzahl der Referenzwerte teilbar.

In diesem Fall wird von dem Mikroprozessor 24a entschieden, dass jeder N-t Messwert als Referenzwert übertragen wird, wobei N gleich dem Quotient aus Wartezeit und Anzahl der Referenzwerte, im gezeigten Beispiel 2 ist. Somit wird jeder zweite Messwert 38 als Referenzwert übertragen. In der Fig. 5 entspräche dies den Messwerten 38 zu dem Zeitpunkt A, C, E, G, I. Somit ließe sich empfängerseitig der Lastgang 30 aus den Referenzwerten zu den Zeitpunkten A, C, E, G und I rekonstruieren. Nach der Übertragung eines solchen Datenpakets 40 würde der Speicher gelöscht werden und es begänne erneut eine Überwachung einer Wartezeit 46 bei gleichzeitigem Erfassen von Messwerten in einem festen Takt.

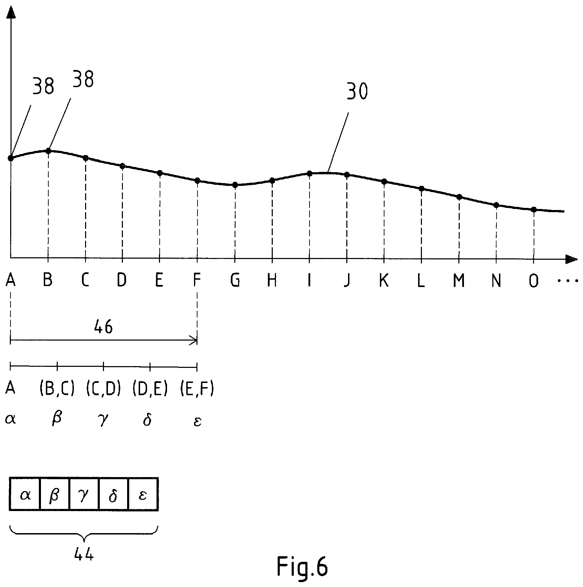

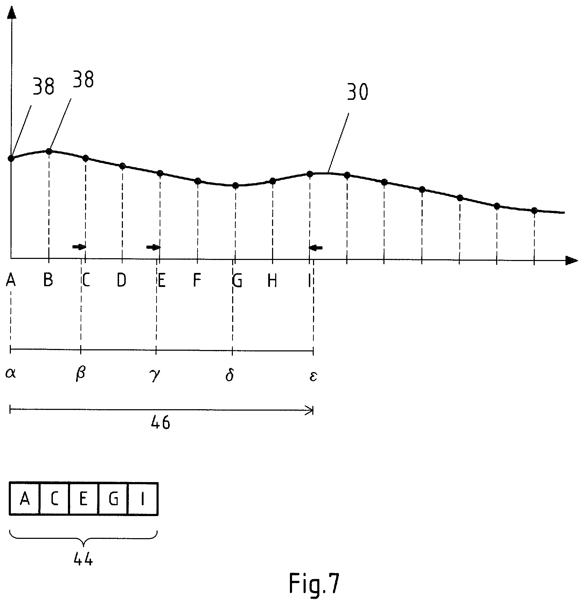

In der Regel ist jedoch die Wartezeit kein ganzzahliges Vielfaches der definierten Anzahl der Referenzwerte. In diesem Fall ist ein Teilen ohne Rest eher unwahrscheinlich. Dies führt dazu, dass Referenzwerte gemäß den Verfahren nach Fig. 6 oder 7 erstellt werden können.

In der Fig. 6 ist erneut ein Lastgang 30 sowie die Erfassung von Messwerten 38 zu Zeitpunkten A-O dargestellt. In dem in Fig. 6 gezeigten Beispiel kann die Wartezeit 46 beispielsweise sechs Messwerte betragen. In der Regel ist die Wartezeit 46 kein ganzzahliges Vielfaches eines Taktes. Zur Vereinfachung wird jedoch vorgeschlagen, dass jeweils nur die Anzahl der vollständig abgelaufenen Takte als Wartezeit 46 betrachtet wird. Dies ist z.B. ein Abrunden der tatsächlichen Wartezeit auf den letzten vollständigen Takt.

In dem gezeigten Beispiel ist somit die Wartezeit 46 gleich 6 und die Anzahl der Referenzwerte bleibt 5. Der Quotient N ergibt sich somit zu 1,2.

In dem in Fig. 6 gezeigten Beispiel werden nunmehr virtuelle Zeitpunkte α, β, γ, δ, ε definiert. Diese virtuellen Zeitpunkte ergeben sich aus einer Multiplikation des Quotients mit dem jeweils festen Intervall zwischen zwei Messwerten 38. D.h., dass das Intervall zwischen den virtuellen Zeitpunkten α und β das 1,2-fache des Intervalls zwischen den Zeitpunkten A und B ist. Dasselbe gilt für die jeweils weiteren virtuellen Zeitpunkte.

Nachdem die virtuellen Zeitpunkte anhand des Quotients erstellt wurden und die Intervallbreite der Referenzwerte somit gespreizt wurde, werden die Referenzwerte berechnet. Dies erfolgt in der Weise, dass die zu den virtuellen Zeitpunkten benachbarten Zeitpunkte der erfassten Messwerte bestimmt werden. Für den virtuellen Zeitpunkt β wären dies die Messwerte zu den Zeitpunkten B und C, für den virtuellen Zeitpunkt γ wären dies die Zeitpunkte C und D, für den virtuellen Zeitpunkt δ wären dies die Zeitpunkte D und E und für den virtuellen Zeitpunkt ε ist der Zeitpunkt F der maßgebliche.

Bei allen virtuellen Zeitpunkten, die zwischen zwei Zeitpunkten von Messwerten liegen, werden nun durch eine Interpolation der entsprechenden Messwerte die Referenzwerte berechnet. Die Interpolation kann ein geometrisches oder arithmetisches Mittel der beiden benachbarten Messwerte beinhalten. Auch kann eine Wichtung der Messwerte erfolgen. Im gezeigten Beispiel könnte eine Wichtung dergestalt sein, dass zu dem virtuellen Zeitpunkt β der aufgrund des Faktors von 1,2 0,2 Intervalle von dem Zeitpunkt B und 0,8 Intervalle von dem Zeitpunkt C entfernt ist, der Messwert 38 zum Zeitpunkt B mit einem Faktor 1-0,2 gewichtet wird und der Messwert 38 zum Zeitpunkt C mit einem Faktor 1-0,8 gewichtet wird. Andere Wichtungen sind ebenfalls denkbar.

Durch die Spreizung werden mit dem Datenfeld 44 Referenzwerte übertragen, die ein Intervall von insgesamt 6 Intervallen zwischen zwei Messwerten umfassen. Somit kann der Lastgang 30 über sechs Messwerte aus fünf Referenzwerten rekonstruiert werden.

Fig. 7 zeigt ein weiteres Beispiel der Rekonstruktion eines Lastgangs 30 aus Referenzwerten, die aus Messwerten 38 ermittelt werden. Auch hier wird zunächst eine Wartezeit 46 ermittelt, die vergangen ist, seit ein Lastgang letztmalig erfolgreich übertragen wurde. Im gezeigten Beispiel ist die Wartezeit etwas mehr als neun Takte, in dem Speicher 26a sind genau neun Messwerte gespeichert. Der Quotient aus Wartezeit 46 und der Anzahl an definierten Referenzwerten beträgt im gezeigten Fall neun durch fünf.

Erneut werden virtuelle Zeitpunkte α-ε bestimmt. Diese ergeben sich aus der Multiplikation eines Intervalls zwischen zwei Messwerten und dem Faktor neun durch fünf. Im gezeigten Beispiel läge der virtuelle Zeitpunkt β 1,8 Intervallbreiten zwischen zwei Messwerten von dem ersten Messwert zum Zeitpunkt A entfernt. Dies bedeutet, dass der virtuelle Zeitpunkt β zeitlich am nächsten zum Zeitpunkt C liegt. Somit wird für den zweiten Referenzwert der Messwert zum Zeitpunkt C verwendet. Dieses Verfahren wird anschließend für jeden virtuellen Zeitpunkt α-ε durchgeführt und es wird überprüft, welcher tatsächliche Zeitpunkt A-I dem jeweiligen virtuellen Zeitpunkt α-ε am nächsten ist. Der Messwert 38 zu diesem Zeitpunkt wird dann als Referenzwert verwendet. Im gezeigten Beispiel wird das Datenfeld 44 aus den Messwerten 38 zu den Zeitpunkten A, C, E, G, und I gebildet. Diese Zeitpunkte liegen jeweils am nächsten zu den virtuellen Zeitpunkten α, β, γ, δ und ε, Respektive.

Mit der Hilfe der gezeigten Spreizung ist es möglich, Lastgänge lückenlos auf fehlerbehafteten Übertragungskanälen zu übertragen. Gescheiterte Übertragungen führen nicht zu einem Rückstau im Sender, sondern es wird stets bei Beibehaltung einer gleichen Datenrate versucht, einen möglichst exakten Lastgang zu übertragen. Der empfängerseitige Lastgang kann durch Rekonstruktion beispielsweise durch Interpolation erhalten werden, ohne dass die tatsächlichen Messwerte übertragen wurden.

### Bezugszeichenliste

- 2: System
- 4a-c: Verbrauchsmengenzähler
- 6a-c: Schnittstelleneinrichtung
- 8a-c: Heimnetz
- 10a-c: Schnittstellen
- 12a-c: Schnittstellen
- 14a: Anzeige
- 16: Funkschnittstelle
- 18a-c: Empfänger
- 20a: Auswerteeinrichtung
- 22a-c: Anzeigeeinrichtung
- 24a: Mikroprozessor
- 26a: Speicher
- 28a: Kommunikationseinrichtung
- 30: Lastgang
- 32: Verbrauchsmenge
- 34: Zeit
- 36: Zeitpunkte
- 38: Messwerte
- 40: Datenpaket
- 42: Kopf
- 44: Datenfeld
- 46: Wartezeit

## Patentansprüche

1. Verfahren zum Übertragen von auf Messwerten basierenden Lastgängen bei dem:
- Messwerte (38) erfasst werden,
- die erfassten Messwerte (38) zwischengespeichert werden, und
- basierend auf den zwischengespeicherten Messwerten (38) Lastgänge (30) übertragen werden,
- aus den zwischengespeicherten Messwerten (38) eine definierte Anzahl an Referenzwerten derart ermittelt wird, dass zumindest ein zeitlicher Abstand zwischen zwei benachbarten Referenzwerten gegenüber einem zeitlichen Abstand zwischen zwei benachbarten Messwerten (38) gespreizt ist, so dass die Anzahl der zwischengespeicherten Messwerte (38) in einem Auswerteintervall größer ist, als die Anzahl der Referenzwerte in dem Auswerteintervall und die Referenzwerte als Lastgang (30) für das Auswerteintervall übertragen werden **dadurch gekennzeichnet, dass**
- eine Wartezeit (46) seit einer letzten erfolgreichen Übertragung eines Lastgangs (30) ermittelt wird, und
- aus den in der Wartezeit (46) zwischengespeicherten Messwerten (38) abhängig von der Wartezeit die definierte Anzahl an Referenzwerten ermittelt wird.

2. Verfahren nach Anspruch 1,
**dadurch gekennzeichnet, dass**
- die Referenzwerte in einem Datenfeld (44) eines Datenpaketes (40) übertragen werden und dass die Größe des Datenfeldes fest definiert ist.

3. Verfahren nach Anspruch 1,
**dadurch gekennzeichnet, dass**
- die Wartezeit (46) durch eine Anzahl äquidistanter Intervalle mit einer definierten Intervalldauer bestimmt wird.

4. Verfahren nach einem der vorangehenden Ansprüche,
**dadurch gekennzeichnet, dass**
- die zeitlichen Abstände zwischen zwei benachbarten Referenzwerten zeitlich äquidistant zueinander gebildet werden.

5. Verfahren nach einem der vorangehenden Ansprüche,
**dadurch gekennzeichnet, dass**
- die Referenzwerte als absolute Werte oder als Differenzwerte zu einem vorhergehenden Referenzwert, insbesondere als Differenzwert zu einem ersten Referenzwert eines Datenfeldes oder als Differenzwert zu einem zeitlich benachbarten Referenzwert gebildet werden.

6. Verfahren nach einem der Ansprüche 3 oder 4,
**dadurch gekennzeichnet, dass**
- ein Quotient N aus der Wartezeit (46) und der definierten Anzahl der Referenzwerte bestimmt wird.

7. Verfahren nach Anspruch 6,
**dadurch gekennzeichnet, dass**
- für den Fall, dass die Wartezeit (46) ohne Rest durch die definierte Anzahl der Referenzwerte teilbar ist, die definierten Referenzwerte aus jedem N-ten zwischengespeicherten Messwert (38) bestimmt werden.

8. Verfahren nach Anspruch 6 oder 7,
**dadurch gekennzeichnet, dass**
- für den Fall, dass die Wartezeit (46) nur mit Rest durch die definierte Anzahl der Referenzwerte teilbar ist, die definierten Referenzwerte aus interpolierten, zwischengespeicherten Messwerte (38) bestimmt werden.

9. Verfahren nach Anspruch 7 oder 8,
**dadurch gekennzeichnet, dass**
- für den Fall, dass die Wartezeit (46) nur mit Rest durch die definierte Anzahl der Referenzwerte teilbar ist, die definierten Referenzwerte aus den zwischengespeicherten Messwerten (38) bestimmt werden, die jeweils zeitlich einem der zwischengespeicherten Messwerte (38) am nächsten liegen.

10. Verfahren nach einem der vorangehenden Ansprüche,
**dadurch gekennzeichnet, dass**
- die Anzahl der definierten Referenzwerte für einen Lastgang (30) kleiner oder gleich ist, als die Anzahl der erfassten Messwerte für diesen Lastgang.

11. Verfahren nach einem der vorangehenden Ansprüche,
**dadurch gekennzeichnet, dass**
- die Lastgänge (30) auf einem kollisionsbehafteten, geteilten Übertragungskanal übertragen werden.

12. Verfahren nach einem der vorangehenden Ansprüche,
**dadurch gekennzeichnet, dass**
- eine Empfangsbestätigung eines empfangenen Datenpaketes (40) empfangen wird und/oder dass nach einer Empfangsbestätigung zwischengespeicherte Messwerte (38) aus einem Speicher gelöscht werden.

13. Vorrichtung eingerichtet zur Durchführung eines Verfahrens nach einem der vorangehenden Ansprüche, umfassend:
- Lesemittel (4a-c) eingerichtet zum Erfassen von Messwerten (38),
- Speichermittel eingerichtet zum Zwischenspeichern der erfassten Messwerte (38), und
- Kommunikationsmittel (16) eingerichtet zum Übertragen von auf den zwischengespeicherten Messwerten (38) basierenden Lastgängen (30), wobei
- Rechenmittel eingerichtet sind, um aus den zwischengespeicherten Messwerten (38) eine definierte Anzahl an Referenzwerten derart zu ermitteln, dass zumindest ein zeitlicher Abstand zwischen zwei benachbarten Referenzwerten gegenüber einem zeitlicher Abstand zwischen zwei benachbarten Messwerten gespreizt wird, so dass die Anzahl der zwischengespeicherten Messwerte (38) in einem Auswerteintervall größer ist, als die Anzahl der Referenzwerte in dem Auswerteintervall und
- dass die Kommunikationsmittel (16) eingerichtet sind, die Referenzwerte als Lastgang (30) für das Auswerteintervall zu übertragen
**dadurch gekennzeichnet, dass**
- die Rechenmittel eine Wartezeit (46) seit einer letzten erfolgreichen Übertragung eines Lastgangs (30) ermitteln und aus den in der Wartezeit (46) zwischengespeicherten Messwerten (38) abhängig von der Wartezeit die definierte Anzahl an Referenzwerten ermitteln.

## Claims

1. Method for transferring load profiles based on measured values in which:
- measured values (38) are recorded,
- the recorded measured values (38) are buffered and
- based on the buffered measured values (38) load profiles (30) are transferred,
- a defined number of reference values is determined from the buffered measured values (38) such that at least one gap in time is spread between two adjacent reference values with respect to a gap in time between two adjacent measured values (38) such that the number of buffered measured values (38) is greater in an evaluation interval than the number of reference values in the evaluation interval and the reference values are transferred as a load profile (30) for the evaluation interval, **characterised in that**
- a wait time (46) is determined since the last successful transfer of a load profile (30) and
- the defined number of reference values is determined dependent upon the wait time from the measured values buffered in the wait time (46).

2. Method according to Claim 1, **characterised in that**
- the reference values are transferred in a data field (44) of a data packet (40) and **in that** the size of the data field is fixedly defined.

3. Method according to Claim 1, **characterised in that**
- the wait time (46) is determined by a number of equidistant intervals with a defined interval duration.

4. Method according to any one of the preceding claims, **characterised in that**
- the gaps in time between two adjacent reference values are formed equidistant in time to one another.

5. Method according to any one of the preceding claims, **characterised in that**
- the reference values are formed as absolute values or as differential values to a preceding reference value, in particular as a differential value to a first reference value of a data field or as a differential value to a time-adjacent reference value.

6. Method according to any one of Claims 3 or 4, **characterised in that**
- a quotient N is determined from the wait time (46) and the defined number of reference values.

7. Method according to Claim 6, **characterised in that**
- in the case where the wait time (46) can be divided by the defined number of reference values without a remainder, the defined reference values are determined from every N^{th} buffered measured value (38).

8. Method according to Claim 6 or 7, **characterised in that**
- in the case where the wait time (46) can only be divided by the defined number of reference values with a remainder, the defined reference values are determined from interpolated, buffered measured values (38).

9. Method according to Claim 7 or 8, **characterised in that**
- in the case where the wait time (46) can only be divided by the defined number of reference values with a remainder, the defined reference values are determined from the buffered measured values (38) that are closest in time to one of the buffered measured values (38).

10. Method according to any one of the preceding claims, **characterised in that**
- the number of the defined reference values for a load profile (30) is smaller than or equal to the number of the recorded measured values for this load profile.

11. Method according to any one of the preceding claims, **characterised in that**
- the load profiles (30) are transferred to a collision-afflicted, separated transfer channel.

12. Method according to any one of the preceding claims, **characterised in that**
- a receipt confirmation of a received data packet (40) is received and/or **in that** measured values (38) buffered after a receipt confirmation are deleted from a memory.

13. Device configured to carry out a method according to any one of the preceding claims, comprising:
- reading means (4a-c) configured to record measured values (38),
- storage means configured to buffer the recorded measured values (38), and
- communication means (16) configured to transfer load profiles (30) based on the buffered measured values (38), wherein
- computing means are configured to determine a defined number of reference values from the buffered measured values (38) such that at least one gap in time is spread between two adjacent reference values with respect to a gap in time between two adjacent measured values such that the number of buffered measured values (38) is larger in an evaluation interval than the number of reference values in the evaluation interval and
- in that the communication means (16) are configured to transfer the reference values as a load profile (30) for the evaluation interval **characterised in that**
- the computing means determine a wait time (46) since the last successful transfer of a load profile (30) and determine the defined number of reference values dependent upon the wait time from the measured values (38) buffered in the wait time (46) .

## Revendications

1. Procédé de transmission de courbes de charge en se basant sur des valeurs mesurées, procédé au cours duquel :
- des valeurs mesurées (38) sont collectées,
- les valeurs mesurées (38) collectées sont stockées en mémoire de façon temporaire, et
- des courbes de charge (30) sont transmises en se basant sur les valeurs mesurées (38) stockées en mémoire de façon temporaire,
- un nombre défini de valeurs de référence est déterminé par calcul à partir des valeurs mesurées (38) stockées en mémoire de façon temporaire, ledit nombre étant déterminé de manière telle, qu'au moins un écart de temps entre deux valeurs de référence proches l'une de l'autre soit élargi par rapport à un écart de temps entre deux valeurs mesurées (38) proches l'une de l'autre, de sorte que le nombre des valeurs mesurées (38) stockées en mémoire de façon temporaire est plus grand dans un intervalle d'évaluation que le nombre des valeurs de référence dans l'intervalle d'évaluation, et les valeurs de référence sont transmises comme courbe de charge (30) pour l'intervalle d'évaluation,
**caractérisé**
- **en ce qu'**un temps d'attente (46) est déterminé par calcul depuis une dernière transmission réussie d'une courbe de charge (30), et
- **en ce que** le nombre défini de valeurs de référence est déterminé par calcul en fonction du temps d'attente, à partir des valeurs mesurées (38) stockées en mémoire de façon temporaire pendant le temps d'attente (46).

2. Procédé selon la revendication 1,
**caractérisé**
- **en ce que** les valeurs de référence sont transmises dans un champ de données (44) d'un paquet de données (40), et en ce que la grandeur du champ de données est définie de façon fixe.

3. Procédé selon la revendication 1,
**caractérisé**
- **en ce que** le temps d'attente (46) est déterminé par un nombre d'intervalles équidistants ayant une durée d'intervalle définie.

4. Procédé selon l'une quelconque des revendications précédentes,
**caractérisé**
- **en ce que** les écarts de temps entre deux valeurs de référence proches l'une de l'autre sont formés en étant équidistants dans le temps l'un par rapport à l'autre.

5. Procédé selon l'une quelconque des revendications précédentes,
**caractérisé**
- **en ce que** les valeurs de référence sont formées comme des valeurs absolues ou comme des valeurs de différence par rapport à une valeur de référence précédente, en particulier comme une valeur de différence par rapport à une première valeur de référence d'un champ de données, ou bien comme une valeur de différence par rapport à une valeur de référence proche dans le temps

6. Procédé selon l'une des revendications 3 ou 4,
**caractérisé**
- **en ce qu'**un quotient N est déterminé à partir du temps d'attente (46) et du nombre défini des valeurs de référence.

7. Procédé selon la revendication 6,
**caractérisé**
- **en ce que**, au cas où le temps d'attente (46) peut être divisé, sans quantité résiduelle, par le nombre défini des valeurs de référence, les valeurs de référence définies sont déterminées à partir de chaque énième valeur mesurée (38) stockée en mémoire de façon temporaire.

8. Procédé selon la revendication 6 ou 7,
**caractérisé**
- **en ce que**, au cas où le temps d'attente (46) peut être divisé, seulement en ayant une quantité résiduelle, par le nombre défini des valeurs de référence, les valeurs de référence définies sont déterminées à partir de valeurs mesurées (38) qui sont calculées par interpolation et stockées en mémoire de façon temporaire.

9. Procédé selon la revendication 7 ou 8,
**caractérisé**
- **en ce que**, au cas où le temps d'attente (46) peut être divisé, seulement en ayant une quantité résiduelle, par le nombre défini des valeurs de référence, les valeurs de référence définies sont déterminées à partir des valeurs mesurées (38) stockées en mémoire de façon temporaire, lesquelles valeurs mesurées sont à chaque fois les plus proches, dans le temps, de l'une des valeurs mesurées (38) stockées en mémoire de façon temporaire.

10. Procédé selon l'une quelconque des revendications précédentes,
**caractérisé**
- **en ce que** le nombre des valeurs de référence définies pour une courbe de charge (30) est plus petit que le nombre - ou égal à celui-ci - des valeurs mesurées ayant été collectées pour cette courbe de charge.

11. Procédé selon l'une quelconque des revendications précédentes,
**caractérisé**
- **en ce que** les courbes de charge (30) sont transmises sur un canal de transmission divisé et affecté par des collisions.

12. Procédé selon l'une quelconque des revendications précédentes,
**caractérisé**
- **en ce qu'**un accusé de réception d'un paquet de données reçu (40) est reçu et/ou en ce que, après un accusé de réception, des valeurs mesurées (38) stockées en mémoire de façon temporaire sont effacées d'une mémoire.

13. Dispositif agencé pour l'exécution d'un procédé selon l'une quelconque des revendications précédentes, comprenant :
- des moyens de lecture (4a-c) agencés pour la collecte de valeurs mesurées (38),
- des moyens de mémorisation agencés pour le stockage en mémoire, de façon temporaire, des valeurs mesurées (38) collectées, et
- des moyens de communication (16) agencés pour la transmission de courbes de charge (30) en se basant sur les valeurs mesurées (38) stockées en mémoire de façon temporaire,
- comprenant des moyens de calcul qui sont agencés pour déterminer, à partir des valeurs mesurées (38) stockées en mémoire de façon temporaire, un nombre défini de valeurs de référence, de manière telle qu'au moins un écart de temps entre deux valeurs de référence proches l'une de l'autre soit élargi par rapport à un écart de temps entre deux valeurs mesurées proches l'une de l'autre, de sorte que le nombre des valeurs mesurées (38) stockées en mémoire de façon temporaire est plus grand dans un intervalle d'évaluation que le nombre des valeurs de référence dans l'intervalle d'évaluation, et
- en ce que les moyens de communication (16) sont agencés pour transmettre les valeurs de référence comme courbe de charge (30) pour l'intervalle d'évaluation,
**caractérisé**
- **en ce que** les moyens de calcul déterminent un temps d'attente (46) depuis une dernière transmission réussie d'une courbe de charge (30) et, en fonction du temps d'attente, déterminent le nombre défini de valeurs de référence, à partir des valeurs mesurées (38) stockées en mémoire de façon temporaire pendant le temps d'attente (46).
